(19) Europäisches Patentamt
European Patent Office
Office européen des brevets

(11) Veröffentlichungsnummer: **0 268 754 A2**

(12) **EUROPÄISCHE PATENTANMELDUNG**

(21) Anmeldenummer: **87112317.0**

(22) Anmeldetag: **25.08.87**

(51) Int. Cl.4: **C08L 71/04**, C08L 21/00, C08L 53/02, C08L 65/00

(30) Priorität: **25.10.86 DE 3636349**

(43) Veröffentlichungstag der Anmeldung: **01.06.88 Patentblatt 88/22**

(84) Benannte Vertragsstaaten: **AT BE DE FR GB IT NL SE**

(71) Anmelder: **HÜLS AKTIENGESELLSCHAFT**
**Patentabteilung / PB 15 - Postfach 13 20**
**D-4370 Marl 1(DE)**

(72) Erfinder: **Jadamus, Hans, Dr.**
**Hervester Strasse 8**
**D-4370 Marl(DE)**
Erfinder: **Beckmann, Günter, Dr.**
**Im Geun 4**
**D-4358 Haltern(DE)**
Erfinder: **Streck, Roland, Dr.**
**Leverkusener Strasse 12**
**D-4370 Marl(DE)**
Erfinder: **Richter, Klaus-Peter, Dr.**
**Erlbrüggestrasse 38**
**D-4370 Marl(DE)**
Erfinder: **Schäfer, Wolfgang, Dr.**
**Wiesenstrasse 71**
**D-4370 Marl(DE)**

(54) **Bauteile auf Basis von Polyphenylenethern und Kautschuken sowie Verfahren zu ihrer Herstellung.**

(57) Die Erfindung betrifft Bauteile aus fest miteinander verbundenen Formstoffen auf Basis folgender Komponenten

A. PPE-haltiger Thermoplast
B. den Thermoplasten umschließendende Schicht aus einem SBR-und/oder SBS-Kautschuk
C. gegebenenfalls eine Zwischenlage auf Basis eines füllstoffhaltigen, pulverförmigen SBR-Kautschukes
D. ein beliebiger Doppelbindungen enthaltener Kautschuk, der ein Vulkanisationsmittel enthält sowie ein Verfahren zu ihrer Herstellung. Dieses besteht darin, daß man

1. den PPE-haltigen Thermoplasten mit der Lösung eines SBR-und/oder SBS-Kautschukes in einem organischen Lösemittel oder dem wäßrigen Kautschuklatex behandelt,
2. das organische Lösemittel bzw. das Wasser gegebenenfalls ganz oder teilweise entfernt
3. die getrocknete Masse gegebenenfalls mit einem füllstoffhaltigen, pulverförmigen SBR-Kautschuk behandelt und
4. die erhaltene Masse mit der Komponente D in Gegenwart eines Vulkanisationsmittels covulkanisiert.



Xerox Copy Centre

# Bauteile auf Basis von Polyphenylenethern und Kautschuken sowie Verfahren zu ihrer Herstellung

Die Erfindung betrifft Bauteile aus Polyphenylenether (PPE) enthaltenden Thermoplasten und Kautschuk sowie Verfahren zu ihrer Herstellung.

Es ist aus der DE-OS 36 02 705 bekannt, daß Bauteile, die gleichzeitig hohe Festigkeit und Gummielastizität aufweisen sollen, durch Covulkanisation von PPE-haltigen Thermoplasten und Doppelbindungen enthaltenden Kautschuken hergestellt werden können. Das Verfahren weist den großen Vorteil auf, daß innerhalb kürzester Zeit ein fester Verbund zwischen dem Thermoplasten und dem Kautschuk geschaffen wird. Insofern stellt es eine erhebliche Verbesserung gegenüber den früheren Verfahren dar, die entweder keinen ausreichenden Kraftschluß ermöglichten oder wesentlich umständlicher waren.

Allerdings ist die Anwendung dieses Verfahrens im Hinblick auf die Kautschuke begrenzt. Während z. B. ein SBR-Kautschuk uneingeschränkt mit dem PPE-haltigen Thermoplasten covulkanisierbar ist, gibt es z. B. beim NR-Kautschuk Probleme. Nach der Lehre der DE-OS 36 02 705 läßt sich ein Verbund mit dem NR-Kautschuk nur dann erzielen, wenn man eine Mischung aus NR-Kautschuk und mindestens 5 % SBR-Kautschuk einsetzt. Diese Einschränkung wird in der Praxis als unangenehmen empfunden. Man ist daran interessiert, auch zwischen PPE-haltigen Thermoplasten und reinem NR-Kautschuk einen Verbund zu erzielen. Aber selbst wenn man eine Mischung aus 5 % SBR-und 95 % NR-Kautschuk verwendet, liegen die Verbundwerte deutlich hinter denjenigen des reinen SBR-Kautschukes zurück. Ähnliche Verfahren werden mit anderen Kautschuktypen gemacht. Die DE-OS 36 02 705 vermittelt dem Fachmann keine Anregungen, wie er in diesen problematischen Fällen einen festen Verbund erzielen könnte. Allgemein besteht ein Bedürfnis nach einem alternativen Verfahren, um Bauteile mit festem Kraftschluß zwischen einem PPE-haltigen Thermoplasten und einem beliebigen Kautschuk herzustellen.

Es wurden jetzt überraschend Bauteile gefunden, die einen festen Verbund zwischen einem PPE-haltigen Thermoplasten und einem beliebigen, Doppelbindungen enthaltenden Kautschuk ermöglichen.

Diese bestehen aus folgenden Komponenten:

A. PPE-haltiger Thermoplast

B. den Thermoplasten umschließende Schicht aus einem SBR-und/oder SBS-Kautschuk

C. gegebenenfalls eine Zwischenlage auf Basis eines füllstoffhaltigen, pulverförmigen SBR-Kautschuks

D. ein beliebiger, Doppelbindungen enthaltender Kautschuk

Besonders bevorzugte Bauteile sind in den Ansprüchen 2 bis 5 beschrieben.

Gegenstand der Erfindung ist ferner ein Verfahren zur Herstellung dieser Bauteile. Dieses besteht darin, daß man die Komponente A mit der Lösung der Komponente B in einem organischen Lösemittel oder der wäßrigen Dispersion der Komponente B (Kautschuklatex) behandelt, das Lösemittel bzw. Wasser gegebenenfalls vollständig oder teilweise entfernt und die erhaltene Masse mit der Komponente D in Gegenwart eines Vulkanisationsmittels covulkanisiert. Geeignete Kautschuklösemittel sind in den Ansprüchen 7 und 8 angegeben. Die Kautschuklösung kann zusätzlich ein Vulkanisationsmittel enthalten. Es ist es auch möglich, die nach Behandlung mit der Kautschuklösung erhaltene Masse mit einem füllstoffhaltigen, pulverförmigen SBR-Kautschuk zu behandeln und erst danach mit der Komponente D zu covulkanisieren.

Die erfindungsgemäßen Bauteile zeichnen sich durch folgende Vorteile aus:

1. Als Kautschukkomponente kann jeder beliebige, Doppelbindungen enthaltende, mit anderen Kautschuken covulkanisierbare Kautschuk eingesetzt werden. Die Erfindung ist daher sehr breit anwendbar. Insbesondere sind selbst die Kautschuke geeignet, die gemäß DE-OS 36 02 705 nicht geeignet waren.

2. Die Bauteile können in wenigen Minuten hergestellt werden.

3. Es werden hervorragende Haftfestigkeiten zwischen dem PPE-haltigen Thermoplasten und dem Kautschuk erzielt.

Im folgenden soll die Erfindung im einzelnen beschrieben werden:

Der PPE-haltige Thermoplast ist entweder reines PPE selbst oder eine Mischung folgender Verbindungsklassen

a) PPE,

b) Polyalkenylene,

c) Styrolpolymerisate,

d) Zusatzstoffe beschrieben werden. Der Anteil des PPE im Thermoplasten sollte mindestens 50 Gewichtsprozent betragen.

Als Polyphenylenether a) kommen Polymere auf Basis substituierter Phenole der allgemeinen Formel

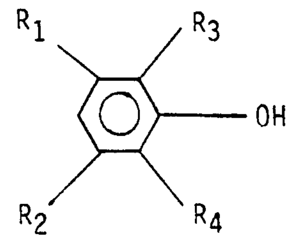

infrage. $R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen, wie z. B. den tertiären Butylrest, oder $R_3$ und $R_4$ haben unabhängig voneinander jeweils die Bedeutung eines n-Alkylrestes mit bis zu 6 C-Atomen. Vorzugsweise wird 2,6-Dimethylphenol verwendet. Selbstverständlich können auch Gemische der hier aufgeführten monomeren Phenole eingesetzt werden. Ganz besonders bevorzugt werden Poly(2,6-dimethyl-1,4-phenylenether) mit einer Grenzviskosität zwischen 0,4 und 0,7 ml/g (gemessen in Chloroform bei 25 °C).

Die Polyphenylether können z. B. in Gegenwart von komplexbildenden Mitteln, wie Kupferbromid und Morpholin, aus 2,6-Dimethylphenol hergestellt werden (vgl. DE-OSS 32 24 692 und 32 24 691). Sie werden üblicherweise als Pulver oder Granulat eingesetzt.

Die Polyalkenylene b) werden durch ringöffnende bzw. ringerweiternde Polymerisation von Cycloalkenen hergestellt (siehe K. J. Ivin, T. Saegusa "Ring-opening Polymerisation, Vol. 1, Elsevier Appl. Sci. Publishers, London, insbesondere Seiten 121 bis 183 (1984).

Bevorzugt werden Polyoctenylene (vgl. A. Dräxler, Kautschuk + Gummi, Kunststoff 1981, Seiten 185 bis 190). Polyoctenylene mit unterschiedlichen Anteilen an cis-und trans-Doppelbindungen sowie unterschiedlichen J-Werten und dementsprechend unterschiedlichen Molekulargewichten sind nach literaturbekannten Methoden erhältlich. Bevorzugt werden Polyoctenylene mit einer Viskositätszahl von 50 bis 350 ml/g, vorzugsweise 80 bis 160 ml/g, bestimmt an einer 0,1 %igen Lösung in Toluol. 55 bis 95 %, vorzugsweise 75 bis 85 %, seiner Doppelbindungen liegen in der trans-Form vor.

Formmassen auf Basis von Polyphenylenethern und Polyoctenylenen werden in den deutschen Patentanmeldungen P 34 36 780.2 und P 34 42 273.0 beschrieben.

Als Komponente c) können Styrolhomopolymerisate und/oder schlagzähe Styrolpolymerisate eingesetzt werden.

Die Styrolhomopolymerisate werden in bekannter Weise aus Styrol durch radikalische Masse-oder Suspensionspolymerisation hergestellt. Ihre Molekularmassen liegen zwischen 150 000 und 300 000 (vgl. Kunststoff-Handbuch, Band V, Polystyrol, Carl Hanser Verlag München, 1969, und Ullmanns Encyklopädie der technischen Chemie, 4. Auflage, Band 19, Verlag Chemie, Weinheim 1980).

Die bevorzugt eingesetzten schlagzähen Styrolpolymerisate werden in bekannter Weise erhalten, indem styrolische Lösungen von Poly-cis-butadien in Masse, in Lösung oder in wäßriger Dispersion polymerisiert werden. Bei dem sogenannten gemischten Verfahren wird die styrolische Kautschuklösung in Masse vorpolymerisiert und in wäßriger Dispersion zu Ende polymerisiert (siehe beispielsweise US-PSS 2 694 692 und 2 862 906).

Die Einstellung der Teilchengröße der Weichphase erfolgt in an sich bekannter Weise in der Stufe der Vorpolymerisation vor der sogenannten Phasenumkehr. Gegegebenfalls kann auch in Gegenwart der bekannten Kettenregler und/oder radikalischer Initiatoren gearbeitet werden. Einzelheiten, wie z. B. der Zusammenhang zwischen der Rührgeschwindigkeit und der Größe und Verteilung der Kautschukteilchen im resultierenden schlagfesten Polymerisat sind dem Fachmann bekannt (siehe z. B. Freeguard Brit. Polym. J. 6, 203 bis 228, (1974).

Der Durchmesser der Teilchen in der elastomeren Gelphase liegt üblicherweise unter 10 µm, vorzugsweise unter 3,5 µm. Der mittlere Durchmesser (Volumenmittel) liegt im Bereich zwischen 1 und 5 µm. Hierbei sind jedoch die Teilchen nicht berücksichtigt, deren Durchmesser entweder unter 0,5 µm oder über 10 µm liegt.

Die mittlere Teilchengröße (Volumenanteil) wird bestimmt durch Ausmessen und Mitteln der Durchmesser von flächengleichen Kreisen (Äquivalentdurchmesser) der Teilchen aus elektronenmikroskopischen Dünnschicht-Aufnahmen.

Mit den Volumina der Teilchen (3. Potenz des Äquivalentdurchmessers) wird die Verteilungskurve und daraus das Volumenmittel errechnet. Für die Auswertung sollen mindestens 2 000 Teilchen herangezogen werden.

Der Thermoplast enthält gegebenenfalls weitere Zusatzstoffe d) wie Stabilisatoren, Verarbeitungshilfsmittel, Verstärungsmittel, Treibmittel und Metallfasern, Ruß, Graphit und Metallflitter, Titandioxid und Zinksulfid. Als Verstärkungsmittel eignen sich beispielsweise Kohlenstoffasern, Aramidfasern und mineralische Substrate. Der Anteil der Verstärkungsmittel im PPE-Werkstoff kann bis zu 50, der der Flammschutzmittel bis zu 15 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z. B. in der Monographie von H. Vogel "Flammenfestmachen von Kunststoff", Hüthig-Verlag 1966, auf den Seiten 94 und 102 beschrieben werden. Es kann sich dabei aber auch um halogenierte Polymere, wie z. B. halogenierte Polyphenylenether (siehe DE-OS 33 34 068) oder bromierte Oligo-bzw. Polystyrole, handeln. Die Verbindungen sollen mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf den Thermoplasten eingesetzt.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon-und Triazolderivate.

Vorzugsweise wird der PPE-haltige Thermoplast durch Vermischung der Komponenten im geschmolzenen Zustand hergestellt. Man schmilzt zumindest eine Komponente auf und vermischt die erhaltene Schmelze mit den übrigen Komponenten. Eine andere Möglichkeit besteht darin, alle Komponenten gemeinsam aufzuschmelzen und zu vermischen.

Vorzugsweise werden Schmelztemperaturen von 250 bis 350 °C, insbesondere von 260 bis 300 °C, und Verweilzeiten von 0,3 bis 10 Minuten, insbesondere von 0,5 bis 3 Minuten, angewendet.

Für das Schmelzen und Vermischen eignen sich übliche Geräte zur Behandlung von hochviskosen Schmelzen, sowohl im absatzweisen als auch im kontinuierlichen Betrieb. Besonders geeignet sind Doppelschneckenkneter und Kokneter.

Es ist aber auch möglich, den PPE-haltigen Thermoplasten statt durch Compoundieren auf andere Weise, z. B. durch Fällen aus dem Lösungsgemisch der Komponenten, herzustellen. Als gemeinsames Lösemittel eignet sich z. B. Toluol, als Fällungsmittel z. B. Methanol. Das Polymerengemisch kann auch durch Verdampfen des Lösemittels z. B. nach der deutschen Patentanmeldung P 33 37 629.8 gewonnen werden.

Die Komponente B, die den Thermoplasten A als dünne Schicht umschließt, ist ein SBR und/oder SBS-Kautschuk. Dabei spielt es keine Rolle, auf welche Weise der Kautschuk erhalten wurde, d. h. ob er durch Polymerisation in Emulsion oder Lösung hergestellt wurde. Der SBR-Kautschuk ist ein Styrol-Butadien-Copolymer mit statistischem Aufbau. Der SBS-Kautschuk ein Styrol-Butadien-Styrol-Blockcopolymer.

Die Komponente C des Bauteiles entsteht durch Covulkanisation eines füllstoffhaltigen, pulverförmigen SBR-Kautschukes mit den Komponenten B und D.
Die Korngröße des pulverförmigen Kautschukes liegt vorzugsweise unter 1 mm und dieser Kautschuk kann daher als Puder bezeichnet werden.

Besonders bevorzugt ist ein pulverförmiger, füllstoffhaltiger E-SBR-Kautschuk. Es gibt eine Reihe unterschiedlicher Verfahren zur Herstellung pulverförmiger, füllstoffhaltiger Kautschuke. Viele Prozesse sind jedoch so langwierig und umständlich, daß sie keine praktische Bedeutung erlangt haben. In jüngster Zeit wurde erstmalig ein Verfahren in die industrielle Praxis überführt, das in der DE-OS 28 22 148 beschrieben ist. Dieses Verfahren zeichnet sich dadurch aus, daß man die Kautschukkomponente mit einer wäßrigen Füllstoff-Suspension vereinigt, die ein wasserlösliches Aluminiumsalz und Wasserglas enthält. Entscheidend ist, daß nicht nur die wäßrige Füllstoff-Dispersionen einen pH-Wert von 3,0 bis 3,7 aufweisen soll, sondern daß man bei der Vereinigung dieser Dispersion mit der Kautschukkomponente soviel Mineralsäure zusetzen soll, daß in der erhaltenen Mischung ebenfalls dieser pH-Bereich eingehalten wird.

Die Komponente D ist ein beliebiger, Doppelbindungen enthaltener Kautschuk, der mit den Kautschukkomponenten B oder gegebenenfalls C covulkanisierbar sein muß.

Vorzugsweise setzt man solche Kautschuke ein, die allein nicht mit einem PPE-haltigen Thermolasten covulkanisierbar sind, wie z. B. NBR-Kautschuk oder insbesondere NR-Kautschuk.

Die Kautschuke der Komponente D enthalten beispielsweise Füllstoffe wie Ruß oder Kieselsäure, Verstreckungsmittel wie z. B. Mineralöle, Vulkanisationsmittel wie Schwefel, Vulkanisationsbeschleuniger und Alterungsschutzmittel. Ein besonders geeignetes Verarbeitungshilfsmittel ist Polyoctenylen (A. Dräxler, Kautschuk + Gummi, Kunststoffe 1983, S. 1037 bis 1043). Die zugesetzten Mineralöle können paraffinisch, naphthenisch oder aromatisch sein.

Die Bauteile können hinsichtlich ihrer Struktur überaus vielfältig sein: z. B. Gumminoppen auf PPE-Platten, PPE-Körner in einer Gummimatrix, Sandwichstrukturen aus Gummi und PPE, PPE-Fasern in Gummi.

Im folgenden soll das erfindungsgemäße Verfahren beschrieben werden. Von einer erheblichen Bedeutung ist dabei das Lösemittel, in dem der Kautschuk gelöst wird und das das PPE bzw. den PPE-haltigen Thermoplasten möglichst nicht auflösen soll. Eine Ausführungsform besteht darin, ein Lösemittel zu verwenden, in dem PPE weitgehend unlöslich ist. Eine andere Ausführungsform besteht darin, ein Lösemittel zu verwenden, das ein Anquellen des Thermoplasten an seiner Oberfläche bewirkt. In diesem Falle ist zusätzlich die Einwirkungszeit des Lösemittels auf den Thermoplasten zu berücksichtigen. Aufgrund dieser Vorgaben eignen sich insbesondere folgende Lösemittel

-aliphatische Kohlenwasserstoffe mit 5 bis 15 C-Atomen, wie z. B. Hexan und Heptan;

-cycloaliphatische Kohlenwasserstoffe mit 5 bis 12 C-Atomen, wie z. B. Cyclohexan und Cyclooctan;

-einfach oder mehrfach ungesättigte, nichtaromatische Kohlenwasserstoffe, die cyclisch oder acyclisch sein können und 5 bis 15 C-Atomen aufweisen, wie z. B. Hexadien-1,3 Dipenten, Limonen, Cyclooctadien-1,5 und Cyclododecatrien-1,3,5.

Daneben eignen sich auch Mischungen der soeben aufgeführten Kohlenwasserstoffe mit Aromaten mit 6 bis 15 C-Atomen, wie z. B. Toluol oder Xylol, sowie mit aliphatischen Ethern mit bis zu 10 C-Atomen, wie z. B. Methyl-tert. butylether.

Man behandelt zunächst den PPE-haltigen Thermoplasten, der gekörnt, als Formteil oder als Halbzeug vorliegen kann, mit einer Lösung eines SBR-und/oder SBS-Kautschukes in den soeben aufgeführten Lösemitteln. Die Konzentration der Lösung ist nicht kritisch. Üblicherweise liegt sie zwischen 5 und 20 Volumenprozent; die Lösung kann auch so hochprozentig sein, daß sie die Konsistenz einer Paste hat.

Nach der Behandlung des Thermoplasten mit der Kautschuklösung wird üblicherweise der größe Teil des Lösemittels, beispielsweise durch Verdampfen, entfernt. Die so erhaltene Masse kann gegebenenfalls noch ein weiteres Mal oder mehrere Male mit der Kautschuklösung behandelt werden. Alternativ kann der Thermoplast auch mit dem wäßrigen Latex eines SBR-und/oder SBS-Kautschukes behandelt und anschließend das Wasser entfernt werden.

Die erhaltene Masse weist vielfach nach der Behandlung mit der Kautschuklösung oder dem Latex eine stark klebende Oberfläche aus. Es kann daher vorteilhaft sein, die Masse mit einem füllstoffhaltigen, pulverförmigen SBR-Kautschuk zu behandeln, d. h. zu pudern, um so die Verarbeitung zu erleichtern.

Schließlich wird die gepuderte oder ungepuderte Masse mit der Komponente D covulkanisiert.

Bei der Covulkanisation sollten die üblichen Vulkanisationsmittel, insbesondere Schwefel zugegen sein, die dem Kautschukfachmann bekannt sind. Am einfachsten ist es, wenn der Kautschuk D bereits diese Mittel enthält.

Die optimalen Covulkanisationsbedingungen hängen von der gewählten Kautschukmischung, insbesondere ihrem Vulkanisationssystem, und der Formteilgestaltung ab. Bezüglich Einzelheiten wird auf das Buch von W. Hofmann a. a. O. Seite 255 ff. verwiesen. In diesem Buch sind auch die bevorzugt verwendeten Abmischungen der Dien-Kautschuke mit Stearinsäure, Zinkoxid, Füllstoffen (z. B. Ruß), Weichmacherölen sowie Vulkanisationsaktivatoren angegeben. Insbesondere verwendet man schwefelhaltige Vulkanisationsaktivatoren.

Eingesetzte Komponenten:

1. PPE-Werkstoff (Komponente A)

Poly(2,6-dimethyl-1,4-phenylenether) mit einem J-Wert von 68 ml/g.

Den Polyphenylenether erhält man durch oxidative Kupplung von 2,6-Dimethylphenol, Abstoppung der Reaktion und anschließende Reaktionsextraktion gemäß DE-OSS 33 13 864 und 33 23 777. Das Lösemittel wird durch Abdampfen entfernt und die Schmelze über einen Entgasungsextruder extrudiert und anschließend granuliert.

2. Naturkautschuk (Komponente D)

Man setzt einen Naturkautschuk ein, wie er im Handbuch Encyclopedia of Polymer Science and Technology, Interscience Publishers New York, 1970, in Band 12, Seite 191, Tabelle 5, Spalte 1 beschrieben ist.

3. Haftvermittler (Komponente B und C)

3.1. Eine Lösung von 10 g des E-SBR-Kautschuks BUNA EM 1502 in 100 $ccm^3$ Hexan (Die Eigenschaften dieses Kautschuktyps sind der unter 3.2 aufgeführten Firmenschrift zu entnehmen)

3.2. Eine Lösung bzw. Suspension, die durch einstündiges Kochen von 10 g eines Dryblends folgender Bestandteile in 100 ccm Hexan gewonnen wurde:

| Gewichtsteile | Stoff |
|---|---|
| 160 | Kautschukpulver, bestehend aus 100 Teilen E-SBR-Kautschuk und 60 Teilen Ruß (Firmenschrift der Chemischen Werke Hüls AG, Nr. 5214 vom Oktober 1983 "Füllstoffhaltiges Kautschukpulver BUNA EM") |
| 1 | Stearinsäure |
| 4 | Zinkoxid |
| 1 | N-Isopropyl-N'-phenly-p-phenylendiamin |
| 1 | N-(1,3-Dimethylbutyl)-N'-Phenyl-p-phenylendiamin |
| 2,5 | eines handelsüblichen Alterungsschutzmittels gegen Licht und Ozon (Antilux^R 111). Es handelt sich um ein paraffinischen Wachs mit breiter Molekulargewichtsverteilung und hohem Molekulargewichtsmittel. (Hersteller: Fa. Dahleke, D-2070 Ahrensburg) |
| 1,8 | Schwefel |
| 1,3 | N-Cyclohexyl-1-benzothiazolsulfenamid S 1 |
| 0,8 | Tetramethylthiruamidsulfid |
| 0,5 | Diphenylguanidin |
| 0,3 | Zinkdiethyldithiocarbamat |

3.3 Eine Lösung von 10 g Cariflex TR 1102 in 100 cm Cyclododecatrien. Es handelt sich um ein Styrol-Butadien-Styrol-Blockcopolymer mit 30 % Styrolanteil der Fa. Shell AG.

Puder

Ein Dryblend wie in 3.2.

Herstellung der Prüfkörper

Durch Spritzgießen hergestellte Platten aus der PPE-Formmasse gemäß 1. werden mit der Kautschuklösung bestrichen, 15 Minuten einer Temperatur von 60 °C unter Frischluftzufuhr ausgesetzt, gegebenenfalls mit soviel Puder bestäubt, wie auf ihnen haften bleibt, mit einer Kautschukplatte belegt und 30 Minuten bei 141 °C unter Druck ausvulkanisiert. Um die getrennte Befestigung von Gummi-und PPE-Schicht in den Backen der Zugmaschine zu ermöglichen, wurde vor der Vulkanisation an einem Ende der Platte eine dünne Aluminiumfolie zwischen PPE-und Kautschukschicht gelegt.

Bestimmung der Haftfestigkeiten

Die Bestimmung erfolgt in Anlehnung an DIN 53 531 und 53 539 mit dem Unterschied, daß die Breite des Probestreifens 30 statt 25 mm beträgt und eine Abzugsgeschwindigkeit von 100 statt 50 mm/min verwendet wird.

Ergebnisse

| Beispiel | Haftvermittler | Puder | Haftkraft (N) |
|---|---|---|---|
| A | - | - | 12 |
| 1 | 3.1 | - | 133 |
| 2 | 3.2 | - | 165 |
| 3 | 3.1 | 4 | 122 |
| 4 | 3.2 | 4 | 225 |

**Ansprüche**

1. Bauteile aus fest miteinander verbundenen Formstoffen auf Basis von PPE und Kautschuken, die durch Covulkanisation eines Doppelbindungen enthaltenden Kautschukes und PPE hergestellt werden,
dadurch gekennzeichnet,
daß die Bauteile aus folgenden Komponenten bestehen:
A. PPE-haltiger Thermoplast
B. den Thermoplasten umschließendende Schicht aus einem SBR-und/oder SBS-Kautschuk
C. gegebenenfalls eine Zwischenlage auf Basis eines füllstoffhaltigen, pulverförmigen SBS-Kautschukes
D. ein beliebiger Doppelbindungen enthaltener Kautschuk, der ein Vulkanisationsmittel enthält

2. Bauteile gemäß Anspruch 1,
dadurch gekennzeichnet,
daß der Thermoplast A Zusatz-und/oder Verstärkungsstoffe enthält.

3. Bauteile gemäß den Ansprüchen 1 und 2,
dadurch gekennzeichnet,
daß die Komponente B ein SBR-oder SBS-Kautschuk ist.

4. Bauteile gemäß den Ansprüchen 1 bis 3,
dadurch gekennzeichnet,
daß der pulverförmige Kautschuk gemäß DE-OS 28 22 148 erhalten wurde.

5. Bauteile gemäß den Ansprüchen 1 bis 4,
dadurch gekennzeichnet,
daß die Komponente D ein NBR-oder vorzugsweise ein NR-Kautschuk ist.

6. Verfahren zur Herstellung der Bauteile gemäß den Ansprüchen 1 bis 5,
dadurch gekennzeichnet,
daß man
1. den PPE-haltigen Thermoplasten mit der Lösung eines SBR-, SBS-und/oder SB-Kautschukes in einem organischen Lösemittel oder mit dem wäßrigen Latex der genannten Kautschuke behandelt,
2. das organische Lösemittel bzw. Wasser gegebenenfalls ganz oder teilweise entfernt und
3. die erhaltene Masse mit der Komponente D in Gegenwart eines Vulkanisationsmittels covulkanisiert.

7. Verfahren nach Anspruch 6,
dadurch gekennzeichnet,
daß man als Lösemittel
a) einen aliphatischen Kohlenwasserstoff.

b) einen cycloaliphatischen Kohlenwasserstoff

c) einen ungesättigten, nichtaromatischen Kohlenwasserstoff

d) einen ungesättigten, cyclischen, jedoch nichtaromatischen Kohlenwasserstoff oder deren Mischungen verwendet.

8. Verfahren nach Anspruch 6 und 7, dadurch gekennzeichnet, daß man als Lösemittel ein Gemisch aus den in Anspruch 7 angegebenen Kohlenwasserstoffen mit einem aromatischen Kohlenwasserstoff oder einem aliphatischen Ether mit bis zu 10 C-Atomen verwendet.

9. Verfahren nach Anspruch 6, dadurch gekennzeichnet, daß die SBR-, SBS-und/oder SB-Kautschuklösung zusätzlich ein Vulkanisationsmittel enthält.

10. Verfahren nach den Ansprüchen 6 bis 8, dadurch gekennzeichnet, daß man die nach der Behandlung des Thermoplasten mit der Kautschuklösung oder dem Kautschuklatex erhaltene und gegebenenfalls getrocknete Masse mit einem füllstoffhaltigen, pulverförmigen SBR-Kautschuk behandelt und anschließend die Covulkanisation mit der Komponente D durchführt.